## Europäisches Patentamt

## European Patent Office

## Office européen des brevets

(19)

(11) Veröffentlichungsnummer: **0 154 927**
**B1**

(12)

# EUROPÄISCHE PATENTSCHRIFT

(45) Veröffentlichungstag der Patentschrift:
**03.05.89**

(51) Int. Cl.⁴: **B 60 R 5/04, B 60 R 7/00**

(21) Anmeldenummer: **85102464.6**

(22) Anmeldetag: **05.03.85**

(54) Transportvorrichtung, insbesondere für Skier, in einem Personenkraftwagen.

(30) Priorität: **12.03.84 DE 3408979**

(43) Veröffentlichungstag der Anmeldung:
**18.09.85 Patentblatt 85/38**

(45) Bekanntmachung des Hinweises auf die Patenterteilung:
**03.05.89 Patentblatt 89/18**

(84) Benannte Vertragsstaaten:
**DE FR GB IT SE**

(56) Entgegenhaltungen:
**DE-A- 3 003 430**
**FR-A- 2 278 537**

(73) Patentinhaber: **BAYERISCHE MOTOREN WERKE Aktiengesellschaft, Postfach 40 02 40 Petuelring 130 - AJ-36, D-8000 München 40 (DE)**

(72) Erfinder: **Ehrbar, Günter, Camerloherstrasse 63, D-8000 München 21 (DE)**
Erfinder: **Ball, Wilfried, Breslauerstrasse 24, D-8312 Dingolfing (DE)**

(74) Vertreter: **Dexheimer, Rolf, Bayerische Motoren Werke Aktiengesellschaft Postfach 40 02 40 Petuelring 130 - AJ-31, D-8000 München 40 (DE)**

## Beschreibung

Die Erfindung betrifft eine Transportvorrichtung, insbesondere für Skier, in einem Personenkraftwagen, entsprechend dem Oberbegriff im Patentanspruch 1.

Aus der deutschen Zeitschrift «Auto-Motor-Sport», 1977, Heft 17, Seite 38 ist eine derartige Transportvorrichtung bekannt. Diese hat den Nachteil, dass für den nichtbenötigten Skisack eine geeignete Aufbewahrungsstelle vorzusehen ist. Wird der Skisack im Kofferraum eines Fahrzeugs mitgeführt, so kann er leicht durch Risse oder Knicke beschädigt oder unansehnlich werden.

Aufgabe der Erfindung ist es, eine Transportvorrichtung nach dem Oberbegriff des Hauptanspruchs 1 zu schaffen, die bei Nichtgebrauch platzsparend und wenig störend untergebracht werden kann und die bei Bedarf mit geringem Bedienungsaufwand benützbar ist.

Erfindungsgemäss wird diese Aufgabe dadurch gelöst, dass an der Durchladeöffnung ein Aufbewahrungsbehälter für den zusammengefalteten Ski- oder Transportsack befestigt ist, der zwei stirnseitige Öffnungen aufweist, durch die im Bedarfsfall eine Beladung des mit der offenen Seite mit dem Aufbewahrungsbehälter verbundenen und in den Fahrgastraum ausziehbaren Ski- oder Transportsackes erfolgt. Dies hat den Vorteil, dass der Ski- oder Transportsack im Aufbewahrungsbehälter sauber aufgeräumt und immer verfügbar ist und vor Verschmutzung oder Beschädigung sicher mitgeführt und bei Bedarf ohne grosse Umstände in den Fahrgastraum ausgestülpt werden kann. Ein weiterer Vorteil ist, dass sich der Aufbewahrungsbehälter so flach gestalten lässt, dass er wenig Platz beansprucht und den Kofferraum nur unwesentlich einschränkt. Ausserdem ist der für den Aufbewahrungsbehälter vorgesehene Ort im Kofferraum meist so weit von der hinteren Ladekante entfernt, dass dieser Platz nur selten für Beladungszwecke benötigt wird.

Zweckmässige Ausgestaltungen der Erfindung sind Gegenstand von Unteransprüchen.

Ein Ausführungsbeispiel des Erfindungsgegenstandes soll nachfolgend anhand einer Zeichnung beschrieben werden. Diese gibt eine Seitenansicht des Aufbewahrungsbehälters mit dem zusammengefaltet eingelegten Ski- oder Transportsack.

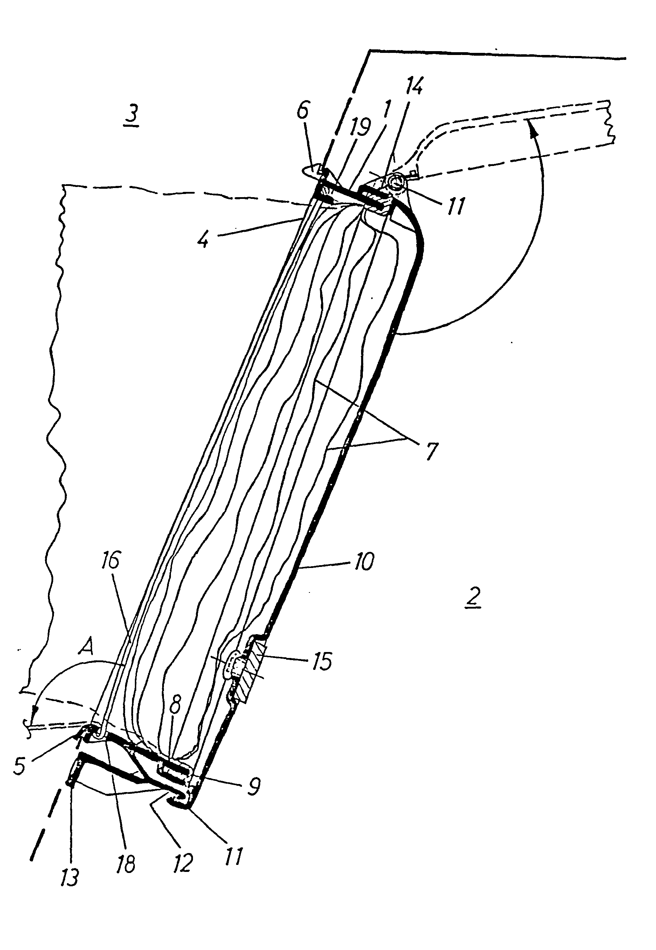

In der Zeichnung ist der an seinen beiden Stirnseiten offene Aufbewahrungsbehälter 1 in die zwischen Kofferraum 2 und Fahrgastraum 3 vorgesehene Durchladeöffnung 4 eingesteckt. Er wird dort mittels zwei vom unteren Bereich des Aufbewahrungsbehälters 1 in seitlichem Abstand nach unten abstehenden U-förmigen Stützen 5, deren offene Seite je einer unteren Kante der Durchladeöffnung 4 zugeordnet ist und zwei mit seitlichem Abstand an der Oberseite des Aufbewahrungsbehälters 1 angeordneten elastischen Federzungen 6 gehalten, die hinter je eine obere Kante der Durchladeöffnung 1 greifen und die beim Herausnehmen des Aufbewahrungsbehälters 1 so weit nach unten zu drücken sind, dass sich dieser entnehmen lässt. Bei diesem Ausführungsbeispiel sind die Seitenwände des Aufbewahrungsbehälters von der Durchladeöffnung 1 in den Kofferraum 2 abstehend ausgebildet. Die Seitenwände könnten aber auch von der Durchladeöffnung 1 nach vorne in Richtung Fahrgastraum 3 abstehen.

In den Aufbewahrungsbehälter 1 ist zusammengefaltet ein Ski- oder Transportsack 7 eingelegt. Das offene Ende des Ski- oder Transportsackes 7 ist zwischen einer nach hinten offenen U-förmigen Ausnehmung 8 am hinteren Rand des Aufbewahrungsbehälters 1 und einem in die Ausnehmung bis zum Einschnappen einer Rasteinrichtung einsteckbaren Rahmen 9 eingeklemmt. Die Rasteinrichtung besteht aus mehreren am Umfang des Rahmens 9 verteilten elastisch verlagerbaren Vorsprüngen, die mit entsprechenden Vertiefungen im Aufbewahrungsbehälter 1 zusammenwirken. Der Rahmen 9 entspricht in seiner Innenkontur etwa der rückwärtigen Öffnung im Aufbewahrungsbehälter 1 und verlängert diesen ein Stück nach rückwärts. Die hintere Öffnung des Rahmens 9 ist durch einen Deckel 10 verschliessbar, der um eine Querachse 11 im oberen Bereich des Aufbewahrungsbehälters 1 schwenkbar ist. Zur Verriegelung des Deckels 10 in seiner Schliessstellung ist an der Aussenkante des Deckels 10 ein Haken 11 ausgebildet, der bei geschlossenem Deckel 10 mit einem an der Unterseite des Aufbewahrungsbehälters 1 angeordneten Widerhaken 12 zusammenwirkt. Dieser ist mit einer Drucktaste 13 versehen, die nach entsprechender Betätigung den Widerhaken 12 soweit elastisch verlagert, dass er den Haken 11 freigibt. An der Oberseite des Aufbewahrungsbehälters 1 ist eine Drehfeder 14 angeordnet, die den entriegelten Deckel 10 in die Offenstellung belastet. Ferner ist im äusseren Abschnitt an der Rückseite des Deckels 10 ein Magnet 15 angebracht, der mit einem oberen Wandabschnitt des Kofferraumes 2 zusammenwirkt und den Deckel 10 in seiner maximal geöffneten Stellung hält.

In weiterer Ausgestaltung der Erfindung könnte an der dem Kofferraum 2 zugewandten Stirnseite des Aufbewahrungsbehälters 1 oder des Rahmens 9 eine Abdichtung vorgesehen sein, an die der geschlossene Deckel 10 zur Anlage kommt. Um ein Herausfallen des in den Aufbewahrungsbehälter 1 zusammengefaltet eingelegten Ski- oder Transportsackes 7 während der Fahrt oder beim Transport des Aufbewahrungsbehälters 1 nach seiner Entnahme aus dem Fahrzeug zu vermeiden, ist die im eingebauten Zustand dem Fahrgastraum zugewandte offene Stirnseite des Aufbewahrungsbehälters 1 mit einem elastischen Sicherungsbügel 16 versehen. Dieser überdeckt etwa in der Mitte in nahezu vertikaler Erstreckung diese Öffnung. Zu seiner Befestigung an dem Aufbewahrungsbehälter 1 ist der Bügel 16 an seinem unteren Ende etwa halbkreisförmig so abgebogen, dass er in nahezu horizontaler Lage mit diesem Ende in eine am Boden des Aufbewahrungsbehälters 1 vorgesehene Einsecköffnung 18 eingreifen kann und dabei nach dem Hochschwenken des Bügels 16 diese Einstecköffnung 18 hintergreift. An dem gegenüberliegenden oberen Ende des Bügels 16 ist durch eine Ausnehmung ein am Rand verbleibender Quersteg gebildet, der in eine nahezu horizontal verlaufende, nach hinten offene Vertiefung 19, im oberen Bereich des Aufbewahrungsbehälters 1, nach vorheriger elastischer Verbiegung des Bügels 16, eingehängt ist.

Beim Gebrauch der Transportvorrichtung wird der biegeweiche Bügel 16, vom Fahrgastraum her, oben ausgehängt und in Pfeilrichtung A nach vorne geschwenkt. Anschliessend ist die Drucktaste 13 zu betätigen, damit der rückwärtige Deckel 10 aufspringt und von der Drehfeder 14 ein Stück in die Offenstellung gebracht wird. Der Deckel 10 kann dann vom Gepäckraum 2 her nach oben in die maximale Offenstellung gebracht werden, in der er dann von dem an der Rückseite des Deckels angeordneten Magnet 15 festgehalten wird.

Durch die beiden stirnseitigen Öffnungen im Aufbewahrungsbehälter 1, die mit der Durchladeöffnung 4 fluchten, kann dann beidhändig eine Beladung der Transportvorrichtung mit länglichen Gegenständen, wie Skier, erfolgen. Dabei wird zunächst der im Aufbewahrungsbehälter 1 zusammengefaltet aufbewahrte Ski- oder Transportsack 7 nach vorne in den Fahrgastraum 3 ausgefahren. Die auf der Fahrgastseite liegende Öffnung im Aufbewahrungsbehälter 1 könnte auch von einem Sicherungsdeckel verschliessbar sein. Wird der Aufbewahrungsbehälter 1 dem Fahrzeug entnommen, so ist der Sicherungsbügel 16 auch als Tragbügel verwendbar.

**Patentansprüche**

1. Transportvorrichtung, insbesondere für Skier, in einem Personenkraftwagen, bei der zwischen Kofferraum (2) und Fahrgastraum (3) eine Durchladeöffnung (4) vorgesehen ist, die von einem herausnehmbaren Zwischenteil abdeckbar ist und an die ein in den Fahrgastraum (3) nach vorne ragender Ski- oder Transportsack (7) anschliessbar ist, dadurch gekennzeichnet, dass an der Durchladeöffnung (4) ein Aufbewahrungsbehälter (1) für den zusammengefalteten Ski- oder Transportsack (7) befestigt ist der zwei stirnseitige Öffnungen aufweist, durch die im Bedarfsfall eine Beladung des mit der offenen Seite mit dem Aufbewahrungsbehälter (1) verbundenen und in den Fahrgastraum (3) ausziehbaren Ski- oder Transportsackes (7) erfolgt.

2. Transportvorrichtung nach Anspruch 1, dadurch gekennzeichnet, dass die Seitenwände des Aufbewahrungsbehälters (1) von der Durchladeöffnung (4) in den Kofferraum (2) abstehen.

3. Transportvorrichtung nach Anspruch 1, dadurch gekennzeichnet, dass die eine Öffnung im Aufbewahrungsbehälter (1), die dem Kofferraum (2) zugewandt ist, durch einen Deckel (10) verschliessbar ist.

4. Transportvorrichtung nach Anspruch 3, dadurch gekennzeichnet, dass der Deckel (10) um eine im oberen Bereich des Aufbewahrungsbehälters (1) vorgesehene Querachse (11) vor die Öffnung schwenkbar ist.

5. Transportvorrichtung nach Anspruch 4, gekennzeichnet durch eine Feder (14), die den entriegelten Deckel (10) in die Offenstellung belastet.

6. Transportvorrichtung nach Anspruch 4, dadurch gekennzeichnet, dass eine Halteeinrichtung vorgesehen ist, die den Deckel (10) in seiner maximal geöffneten Lage hält.

7. Transportvorrichtung nach Anspruch 6, dadurch gekennzeichnet, dass die Haltevorrichtung ein am Deckel (10) angeordneter Magnet (15) ist, der mit einem oberen Wandabschnitt des Kofferraumes (2) zusammenwirkt.

8. Transportvorrichtung nach Anspruch 3, dadurch gekennzeichnet, dass an der dem Kofferraum (2) zugewandten Stirnseite des Aufbewahrungsbehälters (1) eine Abdichtung vorgesehen ist, an die der geschlossene Deckel (10) zur Anlage kommt.

9. Transportvorrichtung nach Anspruch 1, dadurch gekennzeichnet, dass die Befestigung des Aufbewahrungsbehälters (1) an der Durchladeöffnung (4) mittels wenigstens einer vom unteren Bereich des Aufbewahrungsbehälters (1) nach unten abstehenden U-förmigen Stütze (5), deren offene Seite einer unteren Kante der Durchladeöffnung (4) zugeordnet ist und mindestens einer an der Oberseite des Aufbewahrungsbehälters (1) angeordneten elastischen Federzunge (6) erfolgt, die hinter eine obere Kante der Durchladeöffnung (4) greift.

10. Transportvorrichtung nach Anspruch 1, dadurch gekennzeichnet, dass die dem Fahrgastraum (2) zugewandte offene Stirnseite des Aufbewahrungsbehälters (1) mit einem Sicherungsdeckel oder Sicherungsbügel (16) versehen ist.

11. Transportvorrichtung nach Anspruch 1, dadurch gekennzeichnet, dass das offene Ende des Ski- oder Transportsackes (7) zwischen einem Rand des Aufbewahrungsbehälters (1) und einem auf diesen Rand aufsteckbaren Rahmen (9) eingeklemmt ist.

**Claims**

1. A transport device, more particularly for skis, in a passenger car, in which a loading opening (4) is provided between the boot (2) and the car interior (3), the device being adapted to be covered by a removable intermediate part and a ski or transport bag (7) projecting forwards into the car interior (3) being connectable to the device, characterised in that a storage container (1) for the folded ski or transport bag (7) is secured to the loading opening (4) and has two end openings through which the ski or transport bag (7) can be loaded when necessary, the open side of the bag being connected to the storage container (1) and the bag being adapted to be pulled out into the car interior (3).

2. A transport device according to claim 1, characterised in that the side walls of the container (1) project from the loading opening (4) into the boot (2).

3. A transport device according to claim 1, characterised in that an opening in container (1) facing the boot 2 is closable by a cover (10).

4. A transport device according to claim 3, characterised in that the cover (10) is tiltable in front of the opening about a transverse pivot (11) provided in the upper region of the storage container (1).

5. A transport device according to claim 4, characterised by a spring (14) which biases the cover (10), when unlocked, into the open position.

6. A transport device according to claim 4, characterised in that a holder is provided which holds the cover (10) in the maximum open position.

7. A transport device according to claim 6, characterised in that the holder is a magnet (15) disposed on the cover (10) and cooperating with an upper wall portion of the boot (2).

8. A transport device according to claim 3, characterised in that a seal is provided on the end face of the storage container (1) facing the boot (2), and the cover (10) abuts the seal when closed.

9. A transport device according to claim 1, characterised in that the storage container (1) is secured to the loading opening (4) by at least one U-shaped bracket projecting downwards from the bottom region of container (1) and having its open side associated with a bottom edge of the loading opening (4) and at least one resilient spring tongue (6) disposed at the top of the storage container (1) and engaging behind an upper edge of the loading opening (4).

10. A transport device according to claim 1, characterised in that a safety cover or safety stirrup (16) is provided at the open end of container (1) facing the car interior (2).

11. A transport device according to claim 1, characterised in that the open end of the ski or transport bag (7) is clamped between an edge of the storage container (1) and a frame (9) for mounting on the edge.

**Revendications**

1. Dispositif de transport, notamment pour des skis, dans une voiture particulière, dispositif dans lequel, entre le coffre à bagages (2) et le compartiment des passagers (3) est prévue une ouverture de chargement (4), qui est susceptible d'être recouverte par une partie intermédiaire enlevable, et à laquelle peut être raccordé un sac pour des skis ou un sac de transport (7) pénétrant vers l'avant dans le compartiment des passagers (3), dispositif caractérisé en ce qu'un conteneur de dépôt (1) pour le sac des skis ou sac de transport (7) replié est fixé à l'ouverture de chargement (4), ce conteneur comportant deux ouvertures frontales, à travers lesquelles, en cas de besoin, s'effectue un chargement du sac de skis ou du sac de transport (7), relié par son côté ouvert au conteneur de dépôt (1), et extensible dans le compartiment des passagers (3).

2. Dispositif de transport selon la revendication 1, caractérisé en ce que les parois latérales du conteneur de dépôt (1) font saillie à partir de l'ouverture de chargement (4) dans le coffre à bagages (2).

3. Dispositif de transport selon la revendication 1, caractérisé en ce qu'une des ouvertures, tournées vers le coffre à bagages (2), sur le conteneur de dépôt, est susceptible d'être fermée par un couvercle (10).

4. Dispositif de transport selon la revendication 3, caractérisé en ce que le couvercle (10) est susceptible de pivoter devant l'ouverture autour d'un axe transversal (11) prévu sur la partie supérieure du conteneur de dépôt (1).

5. Dispositif de transport selon la revendication 4, caractérisé en ce qu'il comporte un ressort (14) qui sollicite dans la position d'ouverture le couvercle (10) déverrouillé.

6. Dispositif de transport selon la revendication 4, caractérisé en ce qu'il est prévu un dispositif de maintien qui maintient le couvercle (10) dans sa position d'ouverture maximale.

7. Dispositif de transport selon la revendication 6, caractérisé en ce que le dispositif de maintien est un aimant (15) disposé sur le couvercle (10) et qui coopère avec une partie supérieure de la paroi du coffre à bagages (2).

8. Dispositif de transport selon la revendication 3, caractérisé en ce que sur la face frontale tournée vers le coffre à bagages (2) du conteneur de dépôt (1), il est prévu un joint d'étanchéité, contre lequel vient s'appliquer le couvercle (10) fermé.

9. Dispositif de transport selon la revendication 1, caractérisé en ce que la fixation du conteneur de dépôt (1) sur l'ouverture de chargement (4) s'effectue, d'une part, au moyen d'au moins un appui (5) en forme de U, faisant saillie vers le bas depuis la partie inférieure du conteneur de dépôt (1), et dont le côté ouvert est associé à un bord inférieur de l'ouverture de chargement (4), ainsi que, d'autre part, au moyen d'au moins une languette élastique (6) disposée sur le côté supérieur du conteneur de dépôt (1), et qui vient en prise derrière un bord supérieur de l'ouverture de chargement (4).

10. Dispositif de transport selon la revendication 1, caractérisé en ce que la face frontale ouverte du conteneur de dépôt (1), tournée vers le compartiment des passagers (2), est munie d'un couvercle de sécurité ou d'un arceau de sécurité (16).

11. Dispositif de transport selon la revendication 1, caractérisé en ce que l'extrémité ouverte du sac de skis ou du sac de transport (7) est pincée entre un bord du conteneur de dépôt (1) et un cadre (9) susceptible d'être emboîté sur ce bord.